Europäisches Patentamt

European Patent Office

Office européen des brevets

(11) Veröffentlichungsnummer: **0 346 701**
**A1**

(12) # EUROPÄISCHE PATENTANMELDUNG

(21) Anmeldenummer: **89109973.1**

(22) Anmeldetag: **02.06.89**

(51) Int. Cl.⁴: **A01D 80/00**

(30) Priorität: **11.06.88 DE 8807614 U**

(43) Veröffentlichungstag der Anmeldung:
**20.12.89 Patentblatt 89/51**

(84) Benannte Vertragsstaaten:
**AT BE CH DE FR IT LI NL**

(71) Anmelder: **Alois Pöttinger Maschinenfabrik GmbH**

**A-4710 Grieskirchen(AT)**

(72) Erfinder: **Rauscher, Sigurd**
**Sonnfeldstrasse 29**
**A-4710 Grieskirchen(AT)**
Erfinder: **Leposa, Wolfgang**
**Sonnfeldstrasse 17**
**A-4710 Grieskirchen(AT)**
Erfinder: **Haider, Anton**
**Sportplatzstrasse 14**
**A-4710 Grieskirchen(AT)**

(74) Vertreter: **Dupal, Helmut, Dipl-Ing.**
**Jägerweg 12**
**A-4702 Wallern(AT)**

(54) **Heuwerbungsmaschine.**

(57) Heuwerbungsmaschine, insbesondere zum Streuen und Wenden von gemähtem Halmgut, deren Maschinenrahmen aus einem inneren Maschinenrahmen (2), der fest mit einem Zugbalken (7) verbunden ist und wenigstens einem äußeren Maschinenrahmen (3,3'), der an dem inneren Maschinenrahmen (2) um eine waagrechte, in Fahrtrichtung (14) ausgerichtete Gelenkachse (15) verschwenkbar angelenkt ist, besteht, wobei der wenigstens eine äußere Maschinen - rahmen (3,3') in Arbeitsstellung (17) der Maschine in einem geeigneten Winkelbereich zur Bodenanpassung auf-und abschwenkbar ist, während er in der ausgehobenen Stellung der Maschine eine waagrechte Lage (18) einnimmt.

Der Zugbalken (7) ist über eine Schwenkachse (8) mit einer Dreipunktanbauvorrichtung (4) verbunden, deren obere Anlenkstelle (6) mit einem Schiebestück (12) an einem Schiebelager (13) der Dreipunktanbauvorrichtung (4) gelagert ist und mit einem beweglichen Riegelteil (10) einer Riegelvorrichtung (9) fest verbunden ist, deren auf dem Zugbalken (7)

befindliche Riegelraste (11) zum Sperren der Schwenkbarkeit des Zugbalkens (7) gegenüber der Dreipunktanbauvorrichtung (4) dient.

Mit dem beweglichen Riegelteil (10) ist eine Zugstange (22) verbunden, die an einem, auf dem Zugbalken (7) verschwenkbar gelagerten Pendel (23) angreift, an dem ein Ende eines Verbindungsseiles (19) für jeden äußeren Maschinenrahmen (3,3') befestigt ist, das um eine Umlenkrolle (21,21') am hinteren Ende des Zugbalkens (7) umgelenkt ist.

Fig. 1

# Heuwerbungsmaschine

Die Erfindung betrifft eine Heuwerbungsmaschine zum Streuen und Wenden von gemähtem Halmgut mit den Merkmalen des Oberbegriffes des Anspruches 1.

Maschinen dieser Gattung werden zumeist mit vier oder sechs Rechrädern gebaut, die abwechselnd gegenläufig angetrieben ineinanderlaufen und an ihrer Frontseite das Halmgut zusammenrechen und jeweils zwischen einem Rechradpaar nach hinten breit ausstreuen.

Zwei Rechräder sind dabei an einem inneren Maschinenrahmen und weitere Rechräder an diese anschließend an äußeren Maschinenrahmen angeordnet.

Für die Anpassung an Bodenunebenheiten sind die äußeren Rechräder an äußeren Maschinenrahmen angebracht, die gegenüber einem fest an einem Zugbalken befestigten inneren Maschinenrahmen um in Fahrtrichtung ausgerichtete, waagrechte Schwenkachsen in einem Winkelbereich um die waagrechte Lage des äußeren Maschinenrahmens der Höhe nach verschwenkbar gelagert sind.

Der Zugbalken ist mit einer Anbauvorrichtung für den Anbau an das Dreipunkthubwerk eines Zugfahrzeuges über eine lotrechte Schwenkachse gelenkig verbunden.

Eine Riegelvorrichtung ist zwischen dem Zugbalken des Maschinenrahmens und der Dreipunktanbauvorrichtung angebracht und dient zum Aufheben der Verschwenkbarkeit des Zugbalkens gegenüber der Dreipunktanbauvorrichtung, wenn die Heuwerbungsmaschine vom Boden aufgehoben ist und gibt die Verschwenkbarkeit zwischen zwei Anschlägen frei, wenn die Maschine in Arbeitsstellung mit den Stützrädern der Rechräder auf dem Boden aufgestützt ist.

Bei einer Heuwerbungsmaschine dieser Art reicht bei Manövern, bei denen die Heuwerbungsmaschine von der Arbeitsstellung am Boden ausgehoben gefahren wird, wie beim Wenden am Schlagende oder beim Einreihen zum Bearbeiten des Halmgutes, die Aushebehöhe nicht aus um den äußeren Rechrädern eine genügende Bodenfreiheit zu geben.

Aufgabe der Erfindung ist es diesen Nachteil zu beseitigen und eine Maschine zu schaffen,die bei der zur Verfügung stehenden Aushebehöhe der Dreipunktanbauvorrichtung des Zugfahrzeuges ausreichende Bodenfreiheit erhält.

Diese Aufgabe wird bei einer Heuwerbungsmaschine mit den Merkmalen des Anspruches 1 gelöst.

Durch das vom Ausheben gesteuerte zusätzliche Anheben des äußeren Maschinenrahmens,insbesondere auch in einem begrenzten Winkelbereich nach oben, kann mit einem verhältnismäßig geringen Hub der Dreipunktanbauvorrichtung eines Zugfahrzeuges das Auslangen gefunden werden und es sind keine Bedienungsmaßnahmen dazu erforderlich.

Besonders vorteilhafte Ausgestaltungen der Erfindung sind in den Unteransprüchen 2 bis 7 unter Schutz gestellt, die hiermit, zusammen mit dem Anspruch 1, ausdrücklich einen Teil der Beschreibung darstellen.

Die Anwendung eines ausschließlich auf Zug wirksamen Verbindungselementes stellt für die Bodenanpassung der Heuwerbungsmaschine in der Arbeitsstellung eine besonders einfache und wirksame Lösung dar.

Um die Seillänge kurz zu halten, sind die Anlenkstellen des Verbindungsseiles entsprechend gewählt und für die einwandfreie Funktion der Vorrichtung ist die Umlenkung des Verbindungsseiles besonders reibungsarm gestaltet.

Zur Anpassung der Bewegungsabläufe zwischen der Riegelvorrichtung und dem Verbindungsseil ist eine besonders einfache Lösung in einem Pendel gefunden, wobei die Anwendung einer Zugstange die notwendige Seillänge wesentlich verringert und eine genaue Einstellung zuläßt.

Besonders einfach wird die Anordnung durch die Ausbildung der oberen Anlenkstelle mit einem Schiebestück, das in einem Schiebelager gelagert ist, weil nur der Schiebeweg an den Seilweg anzupassen ist.

Eine besonders funktionssichere Riegelvorrichtung umfaßt ein bewegliches Riegelteil, das aus einer Platte mit eingearbeiteten Anschlägen und einer Einkerbung für die Riegelraste besteht.

Die Erfindung wird an Hand der Zeichnung nachstehend beschrieben.

Es zeigt:

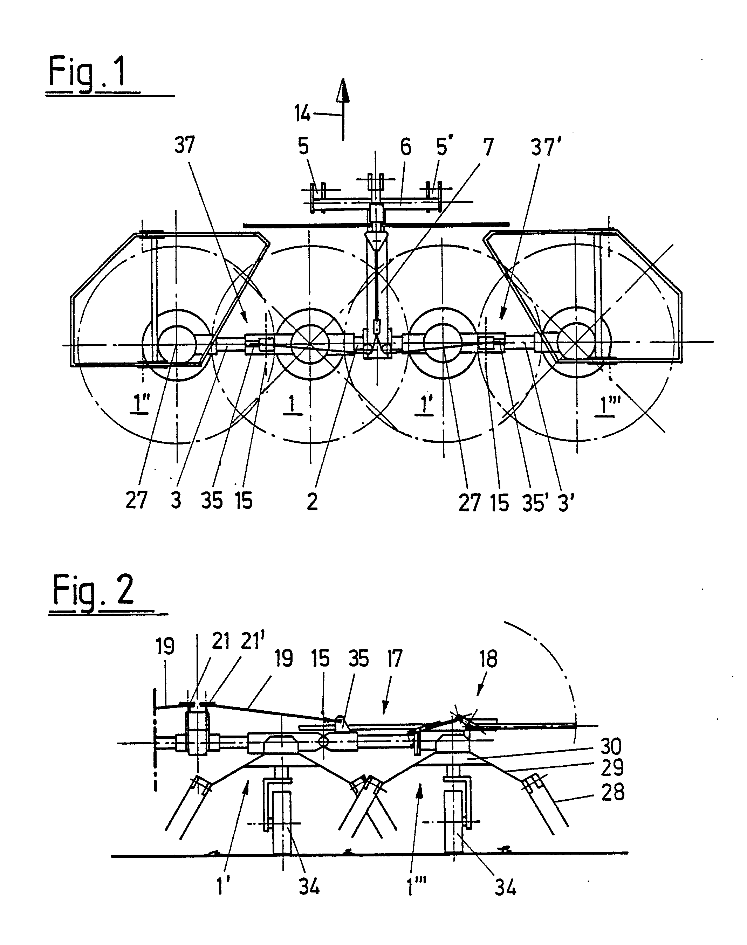

Fig.1 die Draufsicht auf eine Heuwerbungsmaschine mit vier Rechrädern und einem Anbaurahmen,schematisch,

Fig.2 eine Ansicht des rechten Teiles der Heuwerbungsmaschine nach nach Fig. 1 von hinten, schematisch,

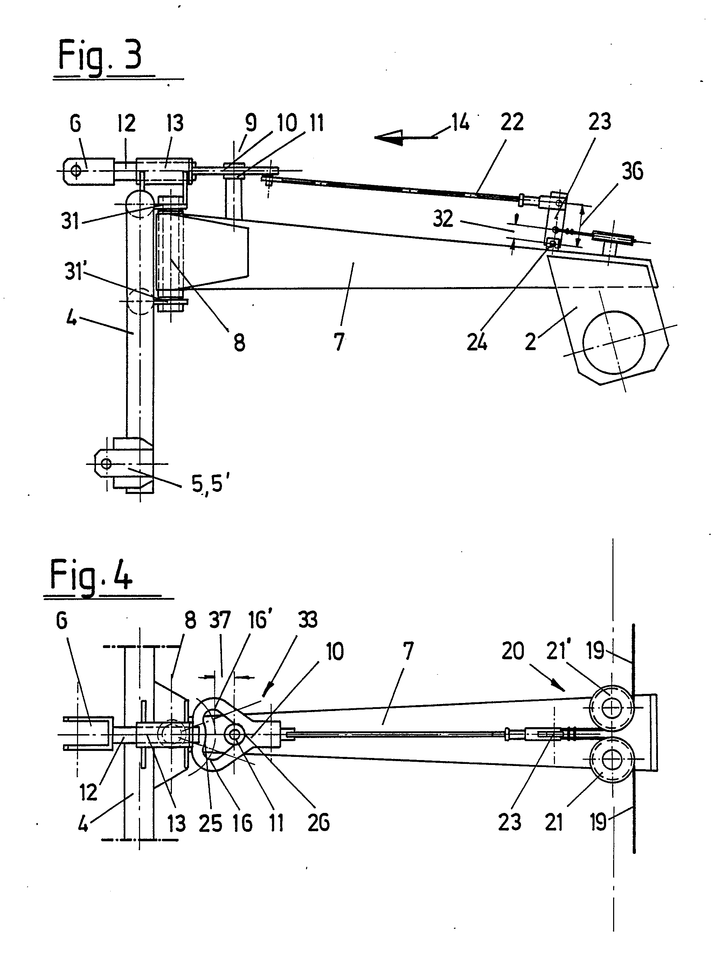

Fig. 3 eine Seitenansicht des Zugbalkens mit der Anbauvorrichtung und einem Teil des inneren Maschinenrahmens und

Fig. 4 eine Draufsicht auf den Maschinenausschnitt nach Fig. 3.

Die Heuwerbungsmaschine weist einen Maschinenrahmen auf, der aus einem inneren Maschinenrahmen 2 und aus zwei äußeren Maschinenrahamen 3,3′ besteht, an denen innere Rechräder 1,1′ und äußere Rechräder 1″, 1‴ gelagert sind, die an aufrechten Drehachsen 27 abwechselnd gegenläufig antreibbar gelagert sind. Die Rechzinken 28 der Rechräder 1 bis 1‴ sind an Rechzinkenträgern 29 befestigt, die an den Rechradnaben 30 der Rechräder verschraubt sind.

Der innere Maschinenrahmen 2 ist mit einem in Fahrtrichtung 14 verlaufenden Zugbalken 7 fest verbunden, der um eine lotrechte Schwenkachse 8, die zwischen Konsolen 31,31′ gelagert ist, verschwenkbar, mit einer Dreipunktanbauvorrichtung 4 verbunden.

Die Dreipunktanbauvorrichtung 4 ist mit zwei unteren Anbaustellen 5,5′ und einer oberen Anbaustelle 6 für den Anbau an ein Zugfahrzeug versehen. An der oberen Anbaustelle 6 ist eine Schiebestück 12 befestigt, das in einem Schiebelager 13 verschiebbar gelagert ist.

An dem Schiebestück 12 ist das bewegliche Riegelteil 10 einer Riegelvorrichtung 9 befestigt, das aus einer Platte besteht, in die zwei seitliche Anschläge 16,16′ mit einer Bahn 25 dazwischen und gegenüberliegend am hinteren Ende 33 eine Einkerbung 26 für eine Riegelraste 11, die auf dem Zugbalken 7 angebracht ist, eingearbeitet sind.

Wenn sich die Heuwerbungsmaschine in Arbeitsstellung 17 befindet, in der die Rechräder 1 bis 1‴ mit den Stützrädern 34 abgestützt sind, ist die Riegelvorrichtung 9 entriegelt und gibt die Schwenkbewegung der lotrechten Schwenkachse 8 zwischen den Anschlägen 16 und 16′ frei. Beim Ausheben der Heuwerbungsmaschine in eine angehobene Stellung, in der die Rechräder 1 bis 1‴ nicht auf dem Boden abgestützt sind, schwenkt der Zugbalken 7 mit der Dreipunktanbauvorrichtung 4, durch das Gewicht bedingt, über die beiden unteren Anbaustellen 5,5′ nach hinten unten,so daß sich das Schiebestück 12 mitsamt dem beweglichen Riegelteil 10 in Bezug auf den Zugbalken 7 nach vorne verschiebt, bis sich die Riegelraste 11 in die Einkerbung 26 des beweglichen Riegelteiles 10 einlegt und die Verschwenkbarkeit vollständig sperrt.

An dem inneren Maschinenrahmen 2 sind beiderseits die äußeren Maschinenrahmen 3,3′ um eine waagrechte, in Fahrtrichtung 14 ausgerichtete Gelenkachse 15, in einem Winkelbereich gegenüber der waagrechten Lage 18 der äußeren Maschinenrahmen 3,3′ nach oben und unten schwenkbeweglich angeordnet und können in eine lotrechte Transportlage überführt werden.

An den äußeren Maschinenrahmen 3,3′ sind an der Oberseite Laschen 35,35′ für die Befestigung je eines Verbindungsseiles 19 angebracht.

Die Verbindungsseile 19 laufen über Umlenkrollen 21,21′ geführt und sind mit ihrem anderen Ende an einem Pendel 23 festgemacht, das vor den Umlenkrollen 21,21′ an der Oberseite des Zugbalkens 7 um eine Achse 24 in Fahrtrichtung 14 schwenkbar angelenkt ist.

An dem Pendel 23 ist eine Zugstange 22 angelenkt, die mit ihrem vorderen Ende mit dem hinteren Ende 33 des beweglichen Riegelteiles 10 in zwei Richtungen schwenkgelenkig verbunden ist.

Die Verbindungsseile 19 halten die äußeren Maschinenrahmen 3,3′ in ausgehobener Stellung der Heuwerbungsmaschine durch die Verschiebung der oberen Anbaustelle 6 gegenüber dem Zugbalken 7, von der die Zugstange 22, das Pendel 23 und die Verbindungsseile 19 mitgenommen werden, in waagrechter Lage 18, so daß die Maschine in dieser Lage genügend Freiraum unter den äußeren Rechrädern 1″ und 1‴ erhält.

Der Abstand 32 der Verbindungsseile 19 und der Abstand 36 der Zugstange 22 von der Achse 24 des Pendels 23 kann an die Weglänge 37 des Schiebestückes 12 und die unterschiedlichen Weglängen der Verbindungsseile 19 angepaßt werden.


Bezugszeichenverzeichnis:

1,1′,1″,1‴ Rechräder
2 innerer Maschinenrahmen
3,3′ äußerer Maschinenrahmen
4 Dreipunktanbauvorrichtung
5,5′ untere Anbaustellen
6 obere Anbaustelle
7 Zugbalken
8 lotrechte Schwenkachse des Zugbalkens 7
9 Riegelvorrichtung
10 bewegliches Riegelteil
11 Riegelraste
12 Schiebestück der oberen Anbaustelle 6
13 Schiebelager
14 Fahrtrichtung
15 Gelenkachse zwischen innerem Maschinenrahmen 2 und äußerem Maschinenrahmen 3
16,16′ Anschläge auf dem beweglichen Riegelteil 10
17 Arbeitsstellung der Heuwerbungsmaschine
18 waagrechte Lage des äußeren Maschinenrahmens 3,3′
19 Verbindungsseil
20 hinteres Ende des Zugbalkens 7
21,21′ Umlenkrolle
22 Zugstange
23 Pendel zwischen Zugstange 22 und Verbindungsseil 19
24 Achse des Pendels 23
25 Bahn zwischen den Anschlägen 16,16′
26 Einkerbung in dem beweglichen Riegelteil 10 für die Riegelraste 11
27 Drehachse des Rechrades 1,1′,1″,1‴
28 Rechzinken
29 Rechzinkenträger

30 Rechradnabe

31,31′ Konsolen für die Lagerung der lotrechten Schwenkachse 8

32 Abstand des Verbindungsseiles 19 von der Achse 24

33 hinteres Ende des beweglichen Riegelteiles 10

34 Stützrad des Rechrades 1,1′,1″,1‴

35,35′ Lasche für das Verbindungsseil

36 Abstand der Zugstange 22 von der Achse 24

37,37′ inneres Ende der äußeren Maschinenrahmen 3,3′

38 Weglänge des Schiebestückes 12


**Ansprüche**

1. Heuwerbungsmaschine, insbesondere zum Streuen und Wenden von gemähtem Halmgut, mit mehr als zwei, an aufrechten Rechradachsen, die am Boden jeweils über ein Stützrad abgestützt sind abwechselnd gegenläufig antreibbaren Rechrädern, die in einem quer zur Fahrtrichtung der Heuwerbungsmaschine angeordneten, mit einem Zugbalken mit Anbauvorrichtung für den Dreipunktanbau an ein Zugfahrzeug versehenen Maschinenrahmen angebracht sind , bei dem die Anbauvorrichtung und der Zugbalken um eine lotrechte Schwenkachse verschwenkbar verbunden sind, deren Verschwenkbarkeit zueinander mit einer Riegelvorrichtung in vom Boden ausgehobener Stellung der Heuwerbungsmaschine gesperrt und in auf dem Boden abgestellter Stellung der Heuwerbungsmaschine zwischen Anschlägen begrenzt freigegeben ist und bei der an den Rechrädern Rechzinkenträger mit daran befestigten Rechzinken angebracht sind, die auf Lücke gestellt, über einen Teil ihrer Umlaufbahn ineinanderlaufen, wobei wenigstens ein äußerer Maschinenrahmen mit dem inneren Maschinenrahmen um eine im wesentlichen waagrechte und in Fahrtrichtung ausgerichtete Gelenkachse gelenkig verbunden ist, um die der äußere Maschinenrahmen zumindest für die Bodenanpassung des wenigstens einen äußeren Rechrades über einen ausreichenden Winkelbereich gegenüber der waagrechten Lage des äußeren Maschinenrahmens nach oben und nach unten verschwenkbar ist, dadurch gekennzeichnet, daß das mit der oberen Anbaustelle (6) der Dreipunktanbauvorrichtung (4) der Heuwerbungsmaschine verbundene bewegliche Riegelteil (10), das mit einer Riegelraste (11) die Riegelvorrichtung (9) bildet, mit dem wenigstens einen äußeren Maschinenrahmen (3,3′) mechanisch in der Weise verbunden ist, daß bei ausgehobener Stellung der Heuwerbungsmaschine der äußere Maschinenrahmen (3,3′) zumindest in eine waagrechte Lage (18) angehoben gehalten ist und in der auf dem Boden abgestellten Arbeitsstellung (17) der Heu werbungsmaschine zur Bodenanpassung der Rechräder (1 bis 1‴) nach oben und unten verschwenkbar ist.

2. Heuwerbungsmaschine nach Anspruch 1, dadurch gekennzeichnet, daß die mechanische Verbindung zwischen dem beweglichen Riegelteil (10) und dem wenigstens einen, äußeren Maschinenrahmen (3) aus einem Verbindungsseil (19) besteht.

3. Heuwerbungsmaschine nach einem oder mehreren der vorhergehenden Ansprüche, dadurch gekennzeichnet, daß das Verbindungsseil (19) am hinteren Ende (20) des Zugbalkens (7) über eine Umlenkrolle (21, oder 21′) geführt ist und an einer nach oben gerichteten Lasche (35 oder 35′) am inneren Ende 37 oder 37′) des äußeren Maschinenrahmens (3 oder 3′) befestigt ist.

4. Heuwerbungsmaschine nach einem oder mehreren der vorhergehenden Ansprüche, dadurch gekennzeichnet, daß zwischen dem Verbindungsseil (19) und dem beweglichen Riegelteil (10) der Riegelvorrichtung (9) eine Zugstange (22) eingeschaltet ist, die an dem beweglichen Riegelteil (10) in mehrere Richtungen beweglich angelenkt ist.

5. Heuwerbungsmaschine nach einem oder mehreren der vorhergehenden Ansprüche, dadurch gekennzeichnet, daß die Zugstange (22) mit dem Verbindungsseil (19)über ein auf dem Zugbalken (7) schwenkbeweglich gelagertes Pendel(23) gelenkig verbunden ist, an dem das Verbindungsseil (19) in einem Abstand von der Achse (24) des Pendels (23) befestigt ist, mit dem die Weglängen der Riegelvorrichtung (9) und des Verbindungsseiles (19) aneinander angepaßt sind.

6. Heuwerbungsmaschine nach einem oder mehreren der vorhergehenden Ansprüche, dadurch gekennzeichnet, daß die Riegelvorrichtung (9) an einer oberen Anbaustelle (6) befestigt ist, die ein Schiebestück (12) umfaßt, mit dem sie in einem Schiebelager (13) auf der Dreipunkanbauvorrichtung (4) gelagert ist.

7. Heuwerbungsmaschine nach einem oder mehreren der vorhergehenden Ansprüche, dadurch gekennzeichnet, daß das bewegliche Riegelteil (10) im wesentlichen aus einer Platte besteht, in die die Anschläge (16,16′) und die dazwischenliegende Bahn (25) für die Riegelraste (11) und gegenüberliegend eine Einkerbung (26) für die Riegelraste (11) für die festgelegte Stellung des Zugbalkens (7) gegenüber der Dreipunktanbauvorrichtung (4) eingearbeitet sind.

Fig.1

Fig.2

EP 0 346 701 A1

## Fig. 3

## Fig. 4

Europäisches
Patentamt

**EUROPÄISCHER RECHERCHENBERICHT**

Nummer der Anmeldung

| | **EINSCHLÄGIGE DOKUMENTE** | | EP 89109973.1 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.X)5 |
| Y | <u>AT - B - 378 892</u><br>(ALOIS PÖTTINGER MASCHINEN-<br>FABRIK GES.M.B.H.)<br>  * Ansprüche; Fig. 1-4 * | 1 | A 01 D 80/00 |
| A | * Seite 4, Zeilen 5ff,<br>  Zeilen 26ff; Fig. 3,4 *<br>     -- | 6,7 | |
| Y | <u>DE - A1 - 3 037 452</u><br>(CLAAS SAULGAU G.M.B.H.)<br>  * Seite 3; Fig. 1-3 *<br>     -- | 1 | |
| A | <u>DE - B2 - 1 632 776</u><br>(MASCHINENFABRIK FAHR AG)<br>  * Spalte 4, Zeilen 55ff;<br>    Fig. 1,2 *<br>     ---- | 2 | |
| | | | **RECHERCHIERTE SACHGEBIETE (Int. Cl.X) 5**<br><br>A 01 D 78/00<br>A 01 D 80/00 |

Der vorliegende Recherchenbericht wurde für alle Patentansprüche erstellt.

| Recherchenort | Abschlußdatum der Recherche | Prüfer |
|---|---|---|
| WIEN | 18-08-1989 | SCHNEEMANN |